# EUROPÄISCHE PATENTSCHRIFT

(11) **EP 2 952 302 B1**
(45) Veröffentlichungstag und Bekanntmachung des Hinweises auf die Patenterteilung: **20.03.2019**
(21) Anmeldenummer: 15168163.2
(22) Anmeldetag: 19.05.2015
(51) Int. Cl.: B25J 15/00, B25J 15/06, B29C 70/54

(54) **GREIF- ODER HALTEVORRICHTUNG**
GRIPPING OR HOLDING DEVICE
DISPOSITIF DE RETENUE OU DE PRÉHENSION

(30) Priorität: 05.06.2014 DE 102014210748
(43) Veröffentlichungstag der Anmeldung: 09.12.2015
(73) Patentinhaber: J. Schmalz GmbH, 72293 Glatten (DE)
(72) Erfinder: Eisele, Thomas, 72275 Alpirsbach-Peterzell (DE); Kuolt, Harald Dr., 78586 Deilingen (DE); Eberle, Marcus, 73457 Lauterburg (DE) (DE); Dunkmann, Walter, 76530 Baden-Baden (DE); Defranceski, Aline, 72160 Horb a.N. (DE); Fritz, Florian, 72074 Tübingen (DE); Reinisch, Hermann, 72172 Sulz a N/Hopfau (DE)
(74) Vertreter: DREISS Patentanwälte PartG mbB

(56) Entgegenhaltungen:
- EP-A1- 0 429 901
- DE-A1-102011 056 029
- DE-A1-102011 106 214
- DE-U1-202007 013 673

## Beschreibung

Die Erfindung betrifft eine Haltevorrichtung gemäß dem Oberbegriff des Anspruchs 1.

Die Haltevorrichtungen umfassen eine Mehrzahl von relativ zueinander beweglichen Greifvorrichtungen, deren räumliche Anordnung insgesamt an eine gewünschte Freiformfläche angepasst werden kann.

Formanpassbare Haltevorrichtungen finden beispielsweise Verwendung, um Werkstücke mit unebenen Oberflächen zu fixieren, beispielsweise bei ihrer Bearbeitung einzuspannen. Eine beispielhafte Spannvorrichtung ist aus der DE 10 2013 201 765 A1 bekannt. Diese Spannvorrichtung umfasst eine Vielzahl von gegenüber einem Grundgerüst jeweils axial verschiebbaren Stößeln, an deren freien Enden jeweils Greifvorrichtungen angeordnet sind. Durch axiales Verschieben der Stößel können die Greifvorrichtungen als Ganzes betrachtet den Verlauf einer gewünschten Anlagefläche annähern. Die DE 20 2007 013 673 U1 zeigt eine Greifvorrichtung mit mehreren Merkmalen des Oberbegriffs des Anspruchs 1. Die EP 0 429 901 A1 zeigt eine Haltevorrichtung mit Merkmalen des Oberbegriffs von Anspruch 1.

Haltevorrichtungen mit einer Mehrzahl von relativ zueinander verlagerbaren Greifvorrichtungen können auch bei der Handhabung von flexiblen und/oder flächigen und/oder mattenartigen Werkstücken wie Textilien, Fasermatten, Folien oder biegsamen Bleche Verwendung finden. So werden z.B. bei der Fertigung von Faserverbundteilen die zugeschnittenen schichtartigen Materialstücke aus einer in der Regel ebenen Ausgangskonfiguration aufgenommen und müssen in eine in der Regel dreidimensional gewölbt verlaufende Zielform überführt werden. Dies muss im Serienprozess präzise, reproduzierbar und zuverlässig erfolgen. Komplex aufgebaute Haltevorrichtungen mit jeweils individuell angetriebenen Stößeln können sich dabei als schwergängig, träge und teuer herausstellen.

Der Erfindung liegt die Aufgabe zugrunde, die Greiffläche einer Haltevorrichtung auf konstruktiv einfache und betriebssichere Weise an Freiformflächen anpassbar zu machen. Insbesondere soll es möglich sein, mit der Haltevorrichtung gehaltene Werkstücke (z.B. flächige und/oder flexible Materialien) kontrolliert in eine gewünschte Freiform zu bringen.

Diese Aufgabe wird durch eine Haltevorrichtung gemäß Anspruch 1 gelöst, die insbesondere zum Greifen oder Spannen von Werkstücken mit komplex geformten oder verformbaren Oberflächen Verwendung finden kann. Die Haltevorrichtung umfasst eine Mehrzahl von Greifvorrichtungen zum Fixieren eines an sie anliegenden Gegenstandes. Die Greifvorrichtungen sind relativ zueinander verlagerbar an einer Tragestruktur angeordnet (insbesondere höhenverlagerbar in Bezug auf ein Grundgerüst), so dass die Greifvorrichtungen durch ihre Verlagerung an eine Freiformfläche anpassbar sind. Insofern wird durch die Mehrzahl an Greifvorrichtungen eine gewünschte Anlagefläche angenähert, deren räumlicher Verlauf durch Verlagerung der Greifvorrichtungen veränderbar ist.

Die Tragestruktur umfasst eine Vielzahl von vorzugsweise direkt miteinander beweglich verbundenen Trageelementen, an welchen Greifvorrichtungen angeordnet sind. Dabei sind mehrere der Trageelemente in einer Reihe angeordnet und zu einer Tragekette verbunden, sodass die Tragekette durch Bewegung der Trageelemente relativ zueinander formanpassbar ist. Die Tragekette ist insbesondere an eine Kurvenlinie anpassbar, welche in der gewünschten Freiformfläche verläuft.

An jedem Trageelement der Tragekette ist je eine Greifvorrichtung vorgesehen. Zwischen je zwei in der Tragekette benachbarten Trageelementen ist ein formveränderbares beziehungsweise konfigurationsveränderbares Verbindungselement vorgesehen, über welches die benachbarten Trageelemente der Tragekette beweglich miteinander verbunden sind.

Insbesondere ist die Tragekette kontrolliert in gewölbte Formen durchbiegbar und wieder ausstreckbar. So kann auf einfache Weise die gewünschte Freiformfläche dargestellt bzw. durch die Greifvorrichtungen angenähert werden. Die Haltevorrichtung kann flexibel an verschiedene Verwendungszwecke angepasst werden. Insbesondere ist eine Verlängerung der Tragekette durch Hinzufügung von Trageelementen möglich. Zu Formanpassung ist es nicht zwingend erforderlich, dass jedes Trageelement aktiv angetrieben wird. So kann es beispielsweise genügen, für nur einige ausgewählte Trageelemente einen Antrieb zur Bewegung der Trageelemente vorzusehen. Die übrigen Trageelemente werden aufgrund der beweglichen Verbindung entlang der Tragekette kontinuierlich mitbewegt.

Insofern sind die Trageelemente in der Art von Wirbelelemente in einer Wirbelsäule zu der Tragekette verbunden.

Vorteilhafterweise erstreckt sich ausgehend von einigen ausgewählten oder von allen Trageelementen der Tragekette jeweils wenigstens ein formanpassbarer Rippenarm in lateraler Richtung zur Tragekette. Die laterale Richtung kann insbesondere im Wesentlichen senkrecht zu der Tragekette verlaufen. An dem Rippenarm beziehungsweise an den Rippenarmen ist insbesondere wenigstens eine Greifvorrichtung angeordnet. Nach einer vorteilhaften Ausgestaltung können an dem jeweiligen Trageelement der Tragekette je zwei Rippenarme vorgesehen sein, welche sich im Wesentlichen entgegengesetzt zueinander lateral von der Tragekette weg erstrecken.

Zur weiteren Verbesserung kann in einem Übergangsbereich zwischen Tragekette und Rippenarm ein Dämpfungselement vorgesehen sein, insbesondere derart, dass Schwingbewegungen des Rippenarmes gegenüber der Tragekette unterdrückbar sind. Dadurch werden ein zuverlässiges Halten und eine zuverlässige Formveränderung ermöglicht.

Durch den sich in lateraler Richtung erstreckenden Rippenarm kann die von der Haltevorrichtung aufgespannte Anlagefläche entlang verschiedener Richtungen ausgeformt werden beziehungsweise sich entlang unabhängiger Richtungen anpassen, nämlich insbesondere entlang der Tragekette und lateral hierzu.

Grundsätzlich kann der Rippenarm beispielsweise von einem flexiblen Träger gebildet sein. Insbesondere ist jedoch denkbar, dass auch der Rippenarm modular als Kette aus beweglich miteinander verbundenen Trageelementen aufgebaut ist, was eine flexible Formanpassung ermöglicht. Außerdem kann ein kettenartiger Rippenarm flexibel erweitert werden, indem zusätzliche Trageelemente hinzugefügt werden. In diesem Sinne können insbesondere ausgehend von einigen ausgewählten oder von allen Trageelementen der Tragekette mehrere weitere Trageelemente in einer Reihe zu einer Rippenkette beweglich miteinander verbunden sein, wobei sich die Rippenkette entlang einer zur Tragekette lateralen Richtung erstreckt (insbesondere im Wesentlichen senkrecht zur Tragekette). Die Verbindung der Trageelemente in der Rippenkette ist vorzugsweise derart, dass die Rippenkette durch Bewegung der Trageelemente relativ zueinander formanpassbar ist. Insofern kann die Rippenkette den vorstehend genannten Rippenarm bilden. Die Rippenkette ist vorzugsweise mit dem Trageelement, von dem sie ausgeht, ebenfalls beweglich verbunden. Insbesondere kann das Trageelement, von welchem die Rippenkette ausgeht, Teil der Rippenkette und der Tragekette sein.

Der Rippenarm beziehungsweise die Rippenkette erstrecken sich insofern in der Art einer Rippe von den Wirbeln der von den Trageelementen gebildeten Wirbelsäule (Tragekette) in lateraler Richtung weg.

Die in der Rippenkette verbundenen Trageelemente können identisch mit dem in der Tragekette verbundenen Trageelemente ausgebildet sein. Denkbar ist jedoch auch, dass die in der Rippenkette verbundenen Trageelemente verschieden von den Trageelementen der Tragekette ausgebildet sind.

Insbesondere kann an jedem Trageelement der Rippenkette (falls vorhanden) eine Greifvorrichtung, insbesondere je eine Greifvorrichtung, vorgesehen sein.

Vorzugsweise weist der Rippenarm bzw. die Rippenkette einen Biegeaktuator auf, mittels welchem der Rippenarme bzw. die Rippenkette in eine gewölbte, insbesondere auch gekrümmte, Form durchbiegbar ist. Vorzugsweise umfasst der Biegeaktuator ein sich entlang des Rippenarmes beziehungsweise der Rippenkette erstreckendes Aktuatorglied, so dass durch Einfahren und Ausfahren des Aktuatorgliedes der Rippenarm bzw. die Rippenkette biegbar und ausstreckbar ist.

Das Aktuatorglied kann insbesondere wenigstens eine Spindel umfassen, welche zwischen zumindest zwei entlang der Rippenkette benachbarten Trageelementen derart wirkt, dass durch Verdrehen der Spindel die jeweils benachbarten Tragelemente gegeneinander abgewinkelt werden. Hierzu können an den Tragelementen jeweils der Spindel (bzw. deren Spindelwendeln) zugeordnete Eingriffsabschnitte vorgesehen sein, in welche die Spindel eingreift. An den Tragelementen ist der jeweilige Eingriffsabschnitt insbesondere versetzt zu einem Verbindungselement (z.B. Gelenk, Scharnier o.ä.) angeordnet, mittels welchem die benachbarten Tragelemente abwinkelbar verbunden sind. Die Spindel ist insbesondere mittels eines geeigneten Drehantriebes aktiv verdrehbar (drehantreibbar).

Die durch die Verdrehung der Spindel erzielte Abwinkelung der Tragelemente relativ zueinander hängt von der Steigung der Spindel ab. Zur weiteren Ausgestaltung können die Steigungen von Spindeln für verschiedene Rippenarme bzw. verschiedene Rippenketten unterschiedlich sein. Denkbar ist auch, dass innerhalb eines Rippenarmes der Biegeaktuator zwischen verschiedenen jeweils benachbarten Tragelementen jeweils verschieden ausgebildete Spindeln umfasst, welche sich z.B. in ihrer Steigung unterscheiden. Dadurch können entlang des Verlaufs eines Rippenarmes unterschiedlich gewölbte bzw. unterschiedlich gekrümmte Abschnitte realisiert werden.

Ausgehend von einigen oder von allen Trageelementen der Tragekette sind vorzugsweise zwei sich in im Wesentlichen entgegengesetzte Richtungen erstreckende Rippenketten vorgesehen. Insofern kann die Tragekette z.B. mittig zwischen den sich von den Trageketten wegerstreckenden Rippenketten verlaufen.

Sind mehrere, sich z.B. von verschiedenen Trageelemente der Tragekette wegerstreckende Rippenketten vorgesehen, so sind die Rippenketten insbesondere derart angeordnet, dass sich entlang der Tragekette benachbarte Rippenketten jeweils in im Wesentlichen gleicher Richtung erstrecken. Dabei ist insbesondere vorgesehen, dass die Rippenketten ausgehend von dieser Orientierung zur Anpassung an die gewünschte Freiformfläche auslenkbar beziehungsweise verformbar sind.

Entsprechend zur Tragekette kann zwischen je zwei in einer Rippenkette benachbarten Trageelementen ein formveränderbares Verbindungselement vorgesehen sein, über welches die benachbarten Trageelementen der Rippenkette beweglich miteinander verbunden sind.

Das Verbindungselement weist eine kraftfreie Neutrallage auf, aus der es elastisch verformbar ist (das heißt in eine abweichende Konfiguration veränderbar ist). Das Verbindungselement ist derart ausgebildet, dass es gegen Verformung aus der Neutrallage eine Gegenkraft ausübt, insbesondere federnd wirkt. Dadurch drängt das Verbindungselement bei Auslenkung von benachbarten Trageelementen gegeneinander federnd in seine Neutrallage zurück. Dadurch kann erreicht werden, dass durch aktive Bewegung einzelner Trageelemente der Tragekette die übrigen Trageelemente stetig mitgenommen werden.

Die Verbindungselemente sind beispielsweise derart ausgebildet, dass die in der Tragekette benachbarten Trageelemente mittels der Verbindungselemente gegeneinander abwinkelbar sind. Insofern können die Verbindungselemente als Gelenkeinrichtung oder Scharniereinrichtung ausgebildet sein. Zusätzlich können Federelemente zur Bereitstellung der kraftfreien Neutrallage und zur Bereitstellung der genannten Gegenkraft vorgesehen sein.

Zur weiteren Ausgestaltung umfasst die Haltevorrichtung antreibbare Aktuatoren, welche dazu ausgebildet sind, wenigstens zwei verschiedene Trageelemente der Tragekette relativ zueinander zu verlagern, insbesondere gegeneinander abzuwinkeln.

Nach einer möglichen Ausgestaltung greifen die Aktuatoren an Anlenkpunkten an, welche an den Trageelemente der Tragekette und/oder an den Verbindungselementen zwischen den Trageelementen (soweit vorgesehen) angeordnet sind. Die Aktuatoren sind insbesondere derart ausgebildet, dass die Trageelemente durch die Aktuatoren gegeneinander verschwenkbar sind. Durch Verlagerung nur einzelner Trageelemente der Tragekette werden die benachbarten Trageelemente jeweils mitgenommen. Daher kann auch mit vergleichsweise wenigen Aktuatoren eine kontinuierlich anpassbare Anlagefläche der Haltevorrichtung dargestellt werden. Es muss nicht zwingend jedes Trageelemente aktiv bewegt werden.

Die Aktuatoren sind z.B. als pneumatische oder hydraulische Zylinder oder als elektrische Aktuatoren ausgebildet. Vorzugsweise umfasst die Haltevorrichtung ein Grundgerüst, wobei die Aktuatoren einerseits an dem Grundgerüst und andererseits an der Tragestruktur angeordnet sind, das heißt zwischen Grundgerüst und Tragestruktur wirken.

Denkbar ist jedoch auch, dass wenigstens einer der Aktuatoren zur Verlagerung der Tragelemente der Tragekette eine drehantreibbare Spindel aufweist, wie vorstehend für die Rippenkette erläutert. Die Spindel wirkt zwischen wenigstens zwei benachbarten Trageelementen derart, dass durch Verdrehen der Spindel die Tragelemente gegeneinander abwinkelbar sind. Auch hier ist denkbar, dass zwischen verschiedenen Tragelementen jeweils unterschiedlich ausgebildete Spindeln wirken, z.B. mit unterschiedlichen Steigungen. Die zur Rippenkette erläuterten Ausgestaltungen können entsprechend Anwendung finden.

Die Ausgestaltung mittels Spindel hat den Vorteil, dass die Verformung der Tragekette mit nur einem Drehantrieb für die Spindel (oder mit nur wenigen Drehantrieben) realisiert werden kann. Ein weiterer Vorteil besteht darin, dass durch die Spindel die eingestellte Lage benachbarter Tragelemente zueinander arretierbar ist. Dies ermöglicht es, die Greifvorrichtung als Ganzes in einer bestimmten Konfiguration im Raum zu bewegen und zu verdrehen, ohne dass aufgrund der Schwerkraft die Form der Tragekette und/oder der Rippenkette verändert wird.

Die Greifvorrichtungen können beispielsweise als Unterdruckgreifer, Magnetgreifer oder Elektroadhäsionsgreifer ausgebildet sein. Denkbar ist jedoch auch eine Kombination mehrerer verschiedener Greifprinzipien, beispielsweise Sauggreifer und Adhäsionsgreifer.

Die Greifvorrichtungen sind insbesondere derart orientiert, dass eine aktive Greiffläche der jeweiligen Greifvorrichtung bei linear gestrecktem Verlauf der Tragekette beziehungsweise der Rippenkette derselben Richtung zugewandt sind. Insofern nähern die Greifflächen der einzelnen Greifvorrichtungen eine gemeinsame Greiffläche der Haltevorrichtung an. Insbesondere sind die Greifvorrichtungen sämtlich derart angeordnet, dass sie parallel wirken.

Vorzugsweise sind die Greifvorrichtungen unabhängig voneinander in ihrer Greifkraft veränderbar und/oder aktivierbar und deaktivierbar ausgebildet. Hierzu kann eine Steuereinrichtung zur Ansteuerung der einzelnen Greifvorrichtungen vorgesehen sein. Die Steuereinrichtung kann beispielsweise über ein Bussystem mit den einzelnen Greifvorrichtungen kommunizieren. Insofern ist es möglich, gezielt ausgewählte Bereiche der von den Greifvorrichtungen insgesamt bereitgestellten Greiffläche der Haltevorrichtung mit einer hohen oder einer geringen Haltekraft zu versehen. Dies kann beispielsweise vorteilhaft sein, wenn ein in einer z.B. ebenen Ausgangskonfiguration aufgenommenes flexibles Material durch Verlagerung der einzelnen Trageelemente in eine gewünschte Form verformt werden soll. Dabei ist es oftmals erforderlich, dass bestimmte Bereiche entlang der insgesamt gebildeten Greiffläche der Haltevorrichtung nachrutschen können, um ein Durchbiegen der insgesamt gebildeten Greiffläche zu ermöglichen. Dies kann durch gezieltes Aktivieren und Deaktivieren einzelner Greifvorrichtungen unterstützt werden.

Zur weiteren Ausgestaltung umfasst die Haltevorrichtung Sensoren, mittels welchen die auf die Trageelemente wirkenden Kräfte messbar sind. Insbesondere sind die Sensoren derart ausgebildet, dass die entlang der Tragekette wirkenden Druck- oder Zugkräfte und/oder die entlang der lateralen Richtungen (zum Beispiel entlang der Rippen) wirkenden Kräfte messbar sind. So kann z.B. ermittelt werden, ob bei Verformung des gehaltenen Materials unerwünschte Zugspannungen auftreten. Die Sensoren können auch zur Messung der aufgewendeten Haltekraft auf den gegriffenen Gegenstand ausgebildet sein. Insbesondere ist denkbar, dass jedes Trageelemente oder ausgewählte Trageelemente der Tragekette und/oder der Rippenketten entsprechende Sensoren umfassen.

Die Erfindung wird im Folgenden anhand der Figuren näher erläutert.

Es zeigen:
- Figur 1:: Haltevorrichtung in perspektivischer Darstellung;
- Figur 2:: perspektivische Ansicht auf die insgesamt gebildete Greiffläche der Haltevorrichtung gemäß Figur 1 in verschiedenen Konfigurationen;
- Figur 3:: Detaildarstellung eines Ausschnitts aus der Tragestruktur der Haltevorrichtung;
- Figur 4:: Detaildarstellung gemäß Figur 3 mit Ansicht auf die Greifflächen;
- Figur 5:: Seitenansicht einer Rippenkette;

- Figur 6:: Seitenansicht der Tragekette;
- Figuren 7 und 8:: mögliche Ausgestaltungen für die Greifvorrichtungen.

In der nachfolgenden Beschreibung sowie in den Figuren sind für identische oder einander entsprechende Merkmale jeweils dieselben Bezugszeichen verwendet.

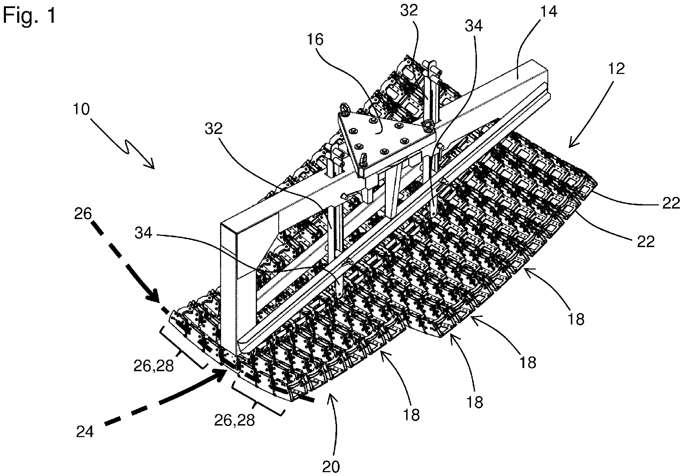

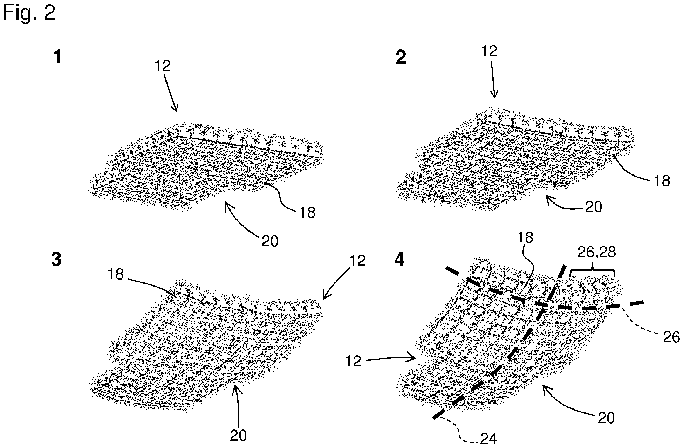

Die Figuren 1 und 2 zeigen eine Haltevorrichtung 10 mit einer im dargestellten Beispiel modular aufgebauten Tragestruktur 12, welche von einem Grundgerüst 14 getragen ist. Das Grundgerüst 14 weist beispielsweise einen Verbindungsabschnitt 16 zur Anordnung der Haltevorrichtung 10 in einer Handhabungsvorrichtung, z.B. an einem Roboterarm oder ähnlichem auf.

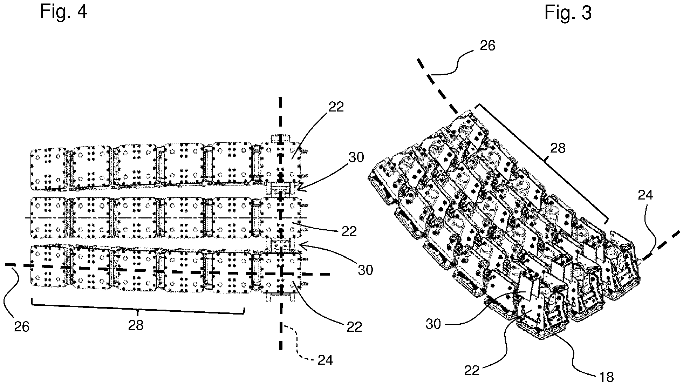

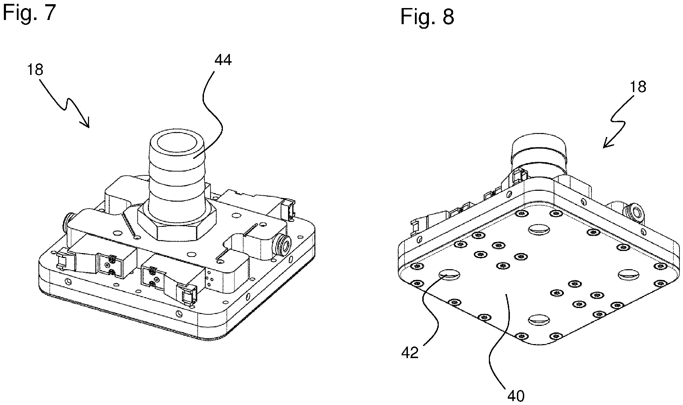

An der Tragestruktur 12 ist eine Vielzahl von Greifvorrichtungen 18 vorgesehen, welche relativ zueinander verlagerbar sind. In den Figuren 1 und 2 sind die Greifvorrichtungen 18 aus Gründen der Übersichtlichkeit nicht im Detail dargestellt. Vielmehr sind die Greifvorrichtungen in entsprechenden Trageelementen eingebaut, die nachfolgend näher erläutert werden (vgl. Figuren 3 - 6). Die Greifvorrichtungen 18 sind in Detail in den Figuren 7 und 8 dargestellt. Durch Verlagerung der Greifvorrichtungen 18 relativ zueinander kann insgesamt eine räumlich an eine gewünschte Freiformfläche anpassbare Greiffläche 20 der Haltevorrichtung 10 bereitgestellt werden.

Die Figur 2 zeigt verschiedene Ansichten auf die insgesamt gebildete Greiffläche 20 der Haltevorrichtung 10. Durch Verlagerung der einzelnen Greifvorrichtungen 18 relativ zueinander können verschiedene gewölbte und/oder gekrümmte Freiformflächen durch die Greiffläche 20 angenähert werden d.h. die Greiffläche 20 kann an verschiedene Freiformflächen angepasst werden.

Die formanpassbare Tragestruktur 12 umfasst eine Vielzahl von modularen Trageelementen 22, wobei in je einem Trageelement 22 eine Greifvorrichtung 18 angeordnet ist (siehe Figur 3). Die Trageelemente 22 sind jeweils in einer Reihe kettenartig miteinander verbunden, wobei verschiedene Ketten gebildet sind, welche in den Figuren 1 und 2 mit gestrichelten Linien beziehungsweise Pfeilen angedeutet sind. Zum einen sind mehrere Trageelemente 22 in eine Reihe zu einer Tragekette 24 verbunden, welche sich im dargestellten Beispiel mittig durch die insgesamt gebildete Greiffläche 20 erstreckt. Ausgehend von den Trageelementen 22 der Tragekette 24 sind mehrere Trageelemente 22 zu Rippenketten 26 miteinander verbunden. Im dargestellten Beispiel erstrecken sich von jedem Trageelement 22 der Tragekette 24 jeweils zwei Rippenketten 26 in im Wesentlichen entgegengesetzten Richtungen von der Tragekette 24 weg. Die Rippenketten 26 bilden Rippenarme 28, welche sich beiderseits von den Trageelementen 22 der Tragekette 24 im Wesentlichen senkrecht zur Tragekette 24 wegerstrecken.

Die Figuren 3 und 4 zeigen einen Ausschnitt aus der Tragestruktur 12. Dabei ist ein Abschnitt der Tragekette 24 zu erkennen, wobei sich von den Trageelementen 22 der Tragekette 24 im dargestellten Ausschnitt je ein Rippenarm 28 wegerstreckt.

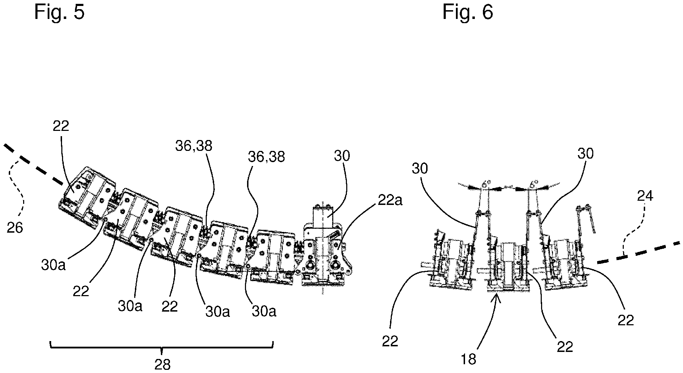

Die Trageelemente 22 der Tragekette 24 sind über Verbindungselemente 30 miteinander in einer Reihe verbunden. Die Verbindungselemente 30 sind derart ausgestaltet, dass sie ein Abwinkeln jeweils benachbarter Trageelemente 22 der Tragekette 24 gegeneinander zulassen. Dabei weisen die Verbindungselemente 30 vorzugsweise eine kräftefreie Neutrallage auf, wobei gegen ein Abwinkeln aus dieser Neutrallage heraus eine Gegenkraft aufgewendet wird. Denkbar ist, dass die Verbindungselemente 30 als gefederte Gelenke ausgebildet sind. Eine einfache Ausgestaltung besteht z.B. auch darin, jeweils zwei benachbarte Trageelemente 22 der Tragekette 24 mit elastisch federnder Winkel zu verbinden (vgl. Figur 6).

Aufgrund der Verbindungselemente 30 werden bei einer aktiven Bewegung einzelner Trageelemente 22 der Tragekette 24 die jeweils benachbarten Trageelemente 22 elastisch mitgenommen. So kann eine kontinuierliche Verformung der Tragekette 24 erzielt werden. Wie in der Figur 1 skizziert, können hierzu wenige Aktuatoren ausreichen. Beispielsweise sind in der Figur 1 zwei Aktuatoren 32 vorgesehen, welche jeweils einen zwischen dem Grundgerüst 14 und der Tragestruktur 12 wirkenden Aktuatorkolben 34 aufweisen. Jeder der Aktuatorkolben 34 greift an einem zugeordneten Anlenkpunkt an der Tragekette 24 an. Der Anlenkpunkt liegt z.B. an einem ausgewählten der Trageelemente 22. Durch Ein- und Ausfahren des Aktuatorkolbens 34 wird das jeweilige Trageelement von dem Grundgerüst 14 weggedrückt oder zu diesem hingezogen. Aufgrund der Verbindungselemente 30 werden die benachbarten Trageelemente kontinuierlich mitgenommen.

Die Figur 5 zeigt eine Seitenansicht eines Rippenarmes 28, welcher von einem ausgewählten Trageelement 22a der Tragekette 24 ausgeht. Die Trageelemente 22 des Rippenarmes 28 sind gelenkig miteinander über Verbindungsmittel 30a verbunden. Um den Rippenarm 28 kontrolliert durchbiegen zu können, ist ein Biegeaktuator 36 vorgesehen, welcher ein sich entlang der Rippenkette 26 erstreckendes Aktuatorglied 38 aufweist. Das Aktuatorglied 38 ist im dargestellten Beispiel von einer auf die Trageelemente 22 wirkenden Spindel 38 gebildet, welche sich versetzt zu den gelenkigen Verbindungselementen 30a zwischen je zwei benachbarten Trageelementen 22 erstreckt und in entsprechende Eingriffsabschnitte an den Tragelementen eingreift. Durch Ein- und Ausdrehen der Spindel können so je zwei benachbarte Trageelemente 22 der Rippenkette 26 kontrolliert gegeneinander abgewinkelt werden. Die Spindel weist dabei eine Steigung (z.B. definiert durch die Ganghöhe der Spindel pro Umlauf) auf, welche die mit einer Spindeldrehung verbundene Abwinkelung der Tragelemente gegeneinander vorgibt.

Die Figur 6 zeigt einen Längsschnitt entlang der Tragekette 24, in welchem die im dargestellten Beispiel als gefederte Winkel ausgestalteten Verbindungselemente 30 zwischen den Trageelementen 22 erkennbar sind.

Die Figuren 7 und 8 zeigen in Detaildarstellung beispielhaft verwendbare Greifvorrichtungen 18, welche in die Trageelemente 22 der Tragestruktur 12 eingesetzt werden können. Eine zum Ausüben einer Greifkraft wirksame Greiffläche 40 der einzelnen Greifvorrichtung 18 ist bei der Anordnung der Greifvorrichtung 18 in den Trageelementen 22 dann derart orientiert, dass die Greiffläche 40 der verschiedenen Greifvorrichtungen 18 in der insgesamt gebildeten Greiffläche 20 der Haltevorrichtung 10 liegt. Im dargestellten Beispiel ist die Greifvorrichtung 18 als Unterdruckgreifer ausgestaltet, wobei die Greiffläche 40 Ansaugöffnungen 42 aufweist, durch welche eine Ansaugströmung einsaugbar ist. Zur Versorgung der einzelnen Greifvorrichtungen 18 mit Unterdruck weisen diese beispielsweise einen Anschlussstutzen 44 auf. Die verschiedenen Anschlussstutzen 44 können dann beispielsweise auf der Rückseite der Greiffläche 20 der Haltevorrichtung 10 mit einem gemeinsamen Unterdruckversorgungssystem verbunden sein. Zur individuellen Aktivierung und Deaktivierung der Greifwirkung einzelner Greifvorrichtungen 18 können die Greifvorrichtungen 18 zusätzlich individuell ansteuerbare Ventile aufweisen, welche vorzugsweise in den Greifvorrichtungen 18 integriert sind. Die den Greifvorrichtungen zugeordneten Tragelemente 22 können Sensoren aufweisen, welche z.B. zur Messung der zwischen benachbarten Tragelementen 22 in der Tagekette 24 oder in einer jeweiligen Rippenkette 26 ausgebildet sind.

## Patentansprüche

1. Haltevorrichtung (10) mit einer Mehrzahl von Greifvorrichtungen (18), welche derart relativ zueinander verlagerbar an einer Tragestruktur (12) angeordnet sind, dass die Greifvorrichtungen (18) durch ihre Verlagerung an eine Freiformfläche anpassbar sind,
wobei die Tragestruktur (12) eine Vielzahl von miteinander beweglich verbundenen Trageelementen (22) umfasst, an welchen Greifvorrichtungen (18) angeordnet sind,
wobei mehrere der Trageelemente (22) in einer Reihe angeordnet und zu einer Tragekette (24) derart verbunden sind, dass die Tragekette (24) durch Bewegung der Trageelemente (22) relativ zueinander formanpassbar ist,
wobei an jedem Trageelement (22) jeweils genau eine Greifvorrichtung (18) vorgesehen ist,
und wobei zwischen je zwei in der Tragekette (24) benachbarten Tragelementen (22) ein formveränderbares oder konfigurationsveränderbares Verbindungselement (30) vorgesehen ist, über welches die benachbarten Tragelemente (22) der Tragekette (24) beweglich miteinander verbunden sind,
**dadurch gekennzeichnet, dass** das Verbindungselement (30, 30a) eine Neutrallage aufweist, aus der es elastisch verformbar ist und derart ausgebildet ist, dass es gegen Verformung aus der Neutrallage eine Gegenkraft ausübt.

2. Haltevorrichtung (10) nach Anspruch 1, **dadurch gekennzeichnet, dass** ausgehend von Trageelementen (22) der Tragekette (24) ein sich in lateraler Richtung zu der Tragekette (24) erstreckender formanpassbarer Rippenarm (28) vorgesehen ist.

3. Haltevorrichtung (10) nach einem der vorherigen Ansprüche, **dadurch gekennzeichnet, dass** ausgehend von Tragelementen (22a) der Tragekette (24) mehrere weitere Tragelemente in einer Reihe zu einer Rippenkette (26) beweglich miteinander verbundenen sind, wobei sich die Rippenkette (26) entlang einer zur Tragekette (24) lateralen Richtung erstreckt.

4. Haltevorrichtung (10) nach dem vorherigen Anspruch, **dadurch gekennzeichnet, dass** die Rippenkette (26) einen Biegeaktuator (36) aufweist, mittels welchem die Rippenkette (26) in eine gewölbte Form durchbiegbar ist.

5. Haltevorrichtung nach dem vorherigen Anspruch, **dadurch gekennzeichnet, dass** der Biegeaktuator (36) zumindest eine drehantreibbare Spindel (38) aufweist, welche wenigstens zwischen zwei benachbarten Trageelementen (22) der Rippenkette (26) derart wirkt, dass durch Verdrehen der Spindel (38) die Tragelemente (22) gegeneinander abwinkelbar sind.

6. Haltevorrichtung nach einem der Ansprüche 3 bis 5, **dadurch gekennzeichnet, dass** ausgehend von Trageelementen (22a) der Tragekette (24) je zwei sich in erstreckende Rippenketten (28) vorgesehen sind.

7. Haltevorrichtung (10) nach einem der Ansprüche 3 bis 6, **dadurch gekennzeichnet, dass** zwischen je zwei in einer Rippenkette (26) benachbarten Tragelementen (22) ein verformbares Verbindungselement (30a) vorgesehen ist, über welches die benachbarten Tragelemente (22) der Rippenkette (26) beweglich miteinander verbunden sind.

8. Haltevorrichtung (10) nach einem der Ansprüche 6 bis 7, **dadurch gekennzeichnet, dass** die Verbindungelemente (30, 30a) derart ausgebildet sind, dass die in der Tragekette (24) benachbarten Tragelemente (22) gegeneinander abwinkelbar sind.

9. Haltevorrichtung (10) nach dem vorherigen Anspruch, **dadurch gekennzeichnet, dass** die Verbindungselemente (30, 30a) als Gelenk oder Scharniereinrichtungen ausgebildet sind.

10. Haltevorrichtung (10) nach einem der vorherigen Ansprüche, **dadurch gekennzeichnet, dass** antreibbare Aktuatoren (32) zur Verlagerung von wenigstens zwei Trageelementen (22) der Tragekette (24) vorgesehen sind.

11. Haltevorrichtung (10) nach dem vorherigen Anspruch, **dadurch gekennzeichnet, dass** die Greifvorrichtungen (18) unabhängig voneinander in ihrer Greifkraft veränderbar ausgebildet sind.

12. Haltevorrichtung (10) nach einem der vorherigen Ansprüche, **dadurch gekennzeichnet, dass** Sensoren zur Messung der auf die Tragelemente (22) wirkenden Kräfte, insbesondere für entlang der Tragekette (24) wirkenden Kräfte und/oder für entlang der lateralen Richtung zur Tragekette (24) wirkenden Kräfte vorgesehen sind.

## Claims

1. Holding device (10) having a plurality of gripping devices (18) which are arranged movable relative to each other on a support structure (12) in such a manner that by their displacement gripping devices (18) are adjustable to a free-form surface,
wherein the support structure (12) comprises a plurality of support elements (22), which are connected to each other in a mutually movable way and at which support elements (22) there are arranged gripping devices (18),
wherein a plurality of support elements (22) are arranged in a row and are connected to form a carrying chain (24) such that the carrying chain (24) is form-adjustable by the movement of the support member (22) relatively to each other,
wherein at each of the support elements (22) there is provided exactly one gripping device (18),
and wherein between each two adjacent support elements (22) of the carrying chain (24) there is provided a deformable or configuration-variable connecting element (30), by which the adjacent support elements (22) of the carrying chain (24) are movably connected with each other,
**characterized in that** the connecting element (30, 30a) has a neutral position from which it is elastically deformable and is formed such that it exerts a counter force against deformation out of the neutral position.

2. Holding device (10) according to claim 1, **characterized in that**, starting from support elements (22) of the carrying chain (24), a form-adjustable rib-arm (28) is provided which extends in the lateral direction to the carrying chain (24).

3. Holding device (10) according to any one of the preceding claims, **characterized in that**, starting from the support elements (22a) of the carrying chain (24), a plurality of further support elements are movably connected with one another to form a rib-chain (26), wherein the rib-chain (26) extends along a lateral direction to the carrying chain (24).

4. Holding device (10) according to the preceding claim, **characterized in that** the rib-chain (26) has a bending actuator (36), by means of which the rib-chain (26) is deflectable in a curved shape.

5. Holding device according to the preceding claim, **characterized in that** the bending actuator (36) has at least one rotationally drivable spindle (38) which at least between two adjacent support elements (22) of the rib-chain (26) acts in such a manner that by turning the spindle (38) the support elements (22) are mutually angled.

6. Holding device according to any one of claims 3 to 5, **characterized in that**, starting from support elements (22a) of the carrying chain (24), in each case two rib-chains (28) are provided.

7. Holding device (10) according to any one of claims 3 to 7, **characterized in that** between each two support members (22) adjacent in a rib-chain (26) is provided a deformable connecting element (30a), by which the adjacent support members (22) of the rib-chain (26) are movably connected with one another.

8. Holding device (10) according to any one of claims 6 to 7, **characterized in that** the connecting elements (30, 30a) are formed such that the adjacent support elements (22) in the carrying chain (24) can be mutually angled.

9. Holding device (10) according to the preceding claim, **characterized in that** the connecting elements (30, 30a) are designed as a joint or hinge means.

10. Holding device (10) according to any one of the preceding claims, **characterized in that** driven actuators (32) are provided for displacement of at least two support elements (22) of the carrying chain (24).

11. Holding device (10) according to the previous claim, **characterized in that** the gripping devices (18) are formed variable in their gripping strength independently of each other.

12. Holding device (10) according to one of the preceding claims, **characterized in that** sensors are provided to measure forces acting on the support elements (22), especially for forces acting along the carrying chain (24) and/or forces acting along the lateral direction to the carrying chain (24).

## Revendications

1. Dispositif de maintien (10) comprenant une pluralité de dispositifs de préhension (18) qui sont agencés de manière à pouvoir se déplacer les uns par rapport aux autres sur une structure de support (12) de telle sorte que les dispositifs de préhension (18) peuvent être adaptés par leur déplacement à une surface de forme libre,
dans lequel la structure de support (12) comprend une pluralité d'éléments de support (22) qui sont reliés de manière mobile les uns aux autres et sur lesquels sont agencés des dispositifs de préhension (18),
dans lequel une pluralité d'éléments de support (22) sont disposés en une rangée et sont reliés pour former une chaîne de support (24), de telle sorte que la chaîne de support (24) puisse être adaptée en forme par le mouvement des éléments de support (22) les uns par rapport aux autres,
dans lequel exactement un dispositif de préhension (18) est prévu respectivement sur chaque élément de support (22),
et dans lequel un élément de liaison (30) apte à être modifié en forme ou apte à être modifié en configuration est prévu entre respectivement deux éléments de support (22) voisins dans la chaîne de support (24), par lequel les éléments de support (22) voisins de la chaîne de support (24) sont reliés de façon mobile les uns aux autres,
**caractérisé par le fait que** l'élément de liaison (30, 30a) présente une position neutre à partir de laquelle il peut être déformé élastiquement et est conçu de manière à exercer une force antagoniste contre une déformation à partir de la position neutre.

2. Dispositif de maintien (10) selon la revendication 1, **caractérisé par le fait qu'**un bras à ailettes (28) adaptable en forme qui s'étend dans la direction latérale par rapport à la chaîne de support (24) est prévu à partir d'éléments de support (22) de la chaîne de support (24).

3. Dispositif de maintien (10) selon l'une quelconque des revendications précédentes, **caractérisé par le fait que**, à partir d'éléments de support (22a) de la chaîne de support (24), une pluralité d'autres éléments de support sont reliés en une rangée de manière mobile les uns aux autres pour former une chaîne à ailettes (26), ladite chaîne à ailettes (26) s'étendant suivant une direction latérale par rapport à la chaîne de support (24).

4. Dispositif de maintien (10) selon la revendication précédente, **caractérisé par le fait que** la chaîne à ailettes (26) présente un actionneur de cintrage (36) au moyen duquel la chaîne à ailettes (26) peut être fléchie selon une forme incurvée.

5. Dispositif de maintien selon la revendication précédente, **caractérisé par le fait que** l'actionneur de cintrage (36) présente au moins une broche (38) apte à être entraînée en rotation qui agit au moins entre deux éléments de support (22) voisins de la chaîne à ailettes (26) de telle sorte que les éléments de support (22) peuvent être inclinés les uns contre les autres en tournant ladite broche (38).

6. Dispositif de maintien selon l'une quelconque des revendications 3 à 5, **caractérisé par le fait que** respectivement deux chaînes à ailettes (28) sont prévus à partir d'éléments de support (22a) de la chaîne de support (24).

7. Dispositif de maintien (10) selon l'une quelconque des revendications 3 à 6, **caractérisé par le fait qu'**un élément de liaison (30a) déformable est prévu entre respectivement deux éléments de support (22) voisins dans une chaîne à ailettes (26), par l'intermédiaire duquel les éléments de support (22) voisins de la chaîne à ailettes (26) sont reliés de manière mobile les uns aux autres.

8. Dispositif de maintien (10) selon l'une quelconque des revendications 6 à 7, **caractérisé par le fait que** les éléments de liaison (30, 30a) sont réalisés de telle sorte que les éléments de support (22) voisins dans la chaîne de support (24) peuvent être inclinés les uns contre les autres.

9. Dispositif de maintien (10) selon la revendication précédente, **caractérisé par le fait que** les éléments de liaison (30, 30a) sont réalisés en tant qu'articulation ou comme dispositifs à charnière.

10. Dispositif de maintien (10) selon l'une quelconque des revendications précédentes, **caractérisé par le fait que** des actionneurs (32) aptes à être entraînés sont prévus pour déplacer au moins deux éléments de support (22) de la chaîne de support (24).

11. Dispositif de maintien (10) selon la revendication précédente, **caractérisé par le fait que** les dispositifs de préhension (18) sont réalisés de manière à pouvoir être modifiés les uns indépendamment des autres quant à leur force de préhension.

12. Dispositif de maintien (10) selon l'une quelconque des revendications précédentes, **caractérisé par le fait que** des capteurs pour mesurer les forces agissant sur les éléments de support (22), en particulier pour des forces agissant le long de la chaîne de support (24) et/ou pour des forces agissant suivant la direction latérale par rapport à la chaîne de support (24) sont prévus.
